# EUROPÄISCHE PATENTSCHRIFT

(11) **EP 1 117 561 B1**
(45) Veröffentlichungstag und Bekanntmachung des Hinweises auf die Patenterteilung: **02.05.2002**
(21) Anmeldenummer: 99952471.3
(22) Anmeldetag: 28.09.1999
(51) Int. Cl.: B60N 3/10

(54) **BECHERHALTERANORDNUNG FÜR EIN KRAFTFAHRZEUG**
CUP HOLDER ARRANGEMENT FOR A MOTOR VEHICLE
ENSEMBLE SUPPORT DE GOBELET POUR VEHICULE AUTOMOBILE

(30) Priorität: 06.10.1998 DE 19845930
(43) Veröffentlichungstag der Anmeldung: 25.07.2001
(73) Patentinhaber: Sego GmbH, 42653 Solingen (DE)
(72) Erfinder: SCHMIDT, Tony, D-42653 Solingen (DE)
(74) Vertreter: Rehders, Jochen, Dipl.-Ing.
(86) Internationale Anmeldenummer: EP9907191
(87) Internationale Veröffentlichungsnummer: WO0020250

(56) Entgegenhaltungen:
- EP-A- 0 747 260
- US-A- 2 778 702
- US-A- 4 733 908
- PATENT ABSTRACTS OF JAPAN vol. 1996, no. 3, 29. März 1996 (1996-03-29) -& JP 07 291014 A (TOYODA GOSEI CO LTD ET AL.) in der Anmeldung erwähnt
- PATENT ABSTRACTS OF JAPAN vol. 1998, no. 8, 30. Juni 1998 (1998-06-30) -& JP 10 059047 A (NIFCO INC) in der Anmeldung erwähnt

## Beschreibung

Die Erfindung betrifft eine Becherhalteranordnung für ein Kraftfahrzeug mit einem in einer Armaturentafel eines Kraftfahrzeugs angeordneten Gehäuse.

Aus der US 2 778 702 ist eine Becherhalteranordnung für ein Kraftfahrzeug mit einem in einer Armaturentafel oder dergleichen eines Kraftfahrzeugs angeordneten Gehäuse bekannt, aus dem sich schubladenartig ein Halter herausziehen und in das sich der Halter hineinschieben läßt. Dieser Halter besteht aus einem Basiselement zum Unterstützen eines Bechers, sowie vorderen und hinteren senkrechten Stützen, an denen gegenläufig ausschwenkbare Halbringe angeordnet sind, von denen jeder einen in beiderseits des Halters angeordnete Führungskurven eingreifenden Führungszapfen aufweist, so daß die Halbringe beim Herausziehen des Halters automatisch in eine ausgebreitete Stellung, quer zur Gehäuseöffnung ausschwenken und beim Einschieben auch wieder automatisch zurückschwenken.

Aus der US 4 733 908 ist eine Becherhalteranordnung für ein Kraftfahrzeug bekannt, bei der ein Halter im unteren Bereich einer Öffnung eines Gehäuses ausschwenkbar angelenkt ist und an senkrechten Schenkeln des Halters gegensinnig ausschwenkbare Halbringe aufweist, die beim Ausschwenken des Halters aus dem Gehäuse durch Federkraft in eine ausgebreitete Stellung, quer zur Gehäuseöffnung ausschwenken, während sie beim Einschwenken des Halters von Hand in eine parallele, nebeneinander liegende Position gebracht werden müssen, um wieder in das Gehäuse zurück eingeführt werden zu können. Die Halbringe sind durch Zahnräder miteinander gekuppelt.

Aus der EP 0 747 260 A2 ist eine Becherhalteranordnung für ein Kraftfahrzeug bekannt, die ein schmales, hochkant stehendes, in einer Armaturentafel eines Kraftfahrzeugs angeordnetes Gehäuse aufweist. Ein Halter ist-im unteren Bereich einer Gehäuseöffnung ausschwenkbar angelenkt und weist einen an gegenüberliegenden, senkrechten Schenkeln schwenkbar angelenkten Vollring auf, der in den Schenkeln mittels Schwenkzapfen gelagert ist und an seinem dem Schenklager des Halters im Gehäuse benachbarten Schwenkzapfen einen Führungszapfen aufweist, der in einer Führungskurve des Gehäuses so geführt ist, daß der Becherhalterring beim Ausschwenken automatisch in eine Stellung quer zur Gehäuseöffnung geschwenkt wird und beim Einschwenken des Halters auch wieder automatisch in eine senkrechte Stellung zurückgeschwenkt wird.

In den JP 07 291 014 A, JP 09 052 550 A (die dem Oberbegriff des Anspruchs 1 entspricht) und JP 10 059 047 A sind ebenfalls Becherhalteranordnungen für ein Kraftfahrzeug mit einem schmalen, hochkant stehenden, in einer Armaturentafel eines Kraftfahrzeugs angeordneten Gehäuse, einem ausschwenk- oder auszieh- bzw. ausschiebbaren Halter im Gehäuse mit einer Ausnehmung zur Unterstützung eines Behälters und an Stützen des Halters gegenläufig ausschwenkbar angeordneten Halbringen mit wenigstens einem in bzw. an einer Führungskurve im bzw. am Gehäuse einbzw. angreifenden Führungselement an wenigstens einem Schwenkzapfen eines Halbrings beschrieben.

Der Erfindung liegt das Problem zugrunde, eine Becherhalteranordnung zu schaffen, die den in einer Armaturentafel gegebenen Raumverhältnissen angepaßt ist und dementsprechend wenig Raum in der Armaturentafel benötigt, wobei die Vorteile eines automatischen Einschwenkens und Ausschwenkens in die Ebene der Schmalseite des Gehäuses gewahrt bleiben sollen.

Dieses Problem wird mit den Merkmalen des Anspruchs 1 gelöst. Dabei wird eine Becherhalteranordnung für ein Kraftfahrzeug mit einem schmalen, hochkant stehenden, in einer Armaturentafel eines Kraftfahrzeugs angeordneten Gehäuse vorgeschlagen, die einen ausschwenkbaren Halter im Gehäuse mit einer Ausnehmung zur Unterstützung eines Bechers, einen Lenkerhebel der einerseits am Gehäuse und andererseits am Halter angelenkt ist, eine zweite Führungskurve im Gehäuse, in die ein zu den Anlenkungen des Lenkerhebels beabstandeter Führungszapfen am Halter eingreift und an Stützen des Halters gegenläufig ausschwenkbar angeordnete Halbringe mit wenigstens einem, in eine erste Führungskurve im Gehäuse eingreifenden, ersten Führungszapfen an wenigstens einem Schwenkzapfen eines Halbrings aufweist.

Die Halbringe schwenken gegenläufig in eine, einen Getränkebecher seitlich haltende, ausgebreitete Stellung aus, die im wesentlichen senkrecht zur Schmalseite des Gehäuses steht und schwenken automatisch beim Zurückschwenken des Halters in das Gehäuse in eine nebeneinander liegende Stellung zurück, in der sie in der Ebene der Schmalseite des Gehäuses liegen und zu einer Basis des Halters gerichtet sind. Hierdurch läßt sich das Gehäuse raumsparend gestalten, da die Halbringe im eingeklappten Zustand nur die Hälfte des Platzes benötigen, die die entgegengesetzt gerichteten Halbringe entsprechend der US 4 733 908 oder der Vollring gemäß der EP 0 747 260 A2 benötigen. Des weiteren wird durch die Anordnung des Lenkerhebels in Verbindung mit der ersten Führungskurve erreicht, daß der Halter weder eine rein translatorische Bewegung noch eine reine Drehbewegung ausführt, was sich ebenfalls auf die Abmessungen des Gehäuses in der Armaturentafel eines Kraftfahrzeugs positiv auswirkt.

Gemäß einer Ausführungsform kann jeder Schwenkzapfen eines jeden Halbrings einen Führungszapfen aufweisen, wobei die beiden Führungszapfen in in gegenüberliegenden Seitenwänden des Gehäuses angeordnete Führungskurven eingreifen, die jede für sich das Ein- und Ausschwenken der Halbringen beim Ein- und Ausschwenken des Halters bewirken.

Gemäß einer anderen Ausführungsform kann ein Schwenkzapfen eines Halbrings einen Führungszapfen aufweisen, der in eine in einer Seitenwand des Gehäuses angeordnete Führungskurve eingreift, während der zweite Halbring mit dem ersten Halbring mittels Zahnräder gekuppelt ist. Auch bei dieser Ausführungsform ist somit das gegenläufige Schwenken der Halbringe gewährleistet, das bezüglich des Gehäuses jedoch nur von einem Halbring über seinen Führungszapfen gesteuert wird.

Wenn am Lenkerhebel oder am Halter eine im Gehäuse angeordnete Biegefeder angreift, läßt sich der Halter aus dem Gehäuse mittels einer Tipautomatik herausschwenken. Hierzu ist im Gehäuse eine an dem Halter angreifende Rastanordnung vorgesehen, die beim Antippen einer Blende am Halter ausrastet, so daß der Halter unter der Wirkung der Biegefeder ausschwenkt, während diese Rastanordnung beim Einschieben des Halters in das Gehäuse wieder einrastet.

Um eine reibungsfreie und spielfreie Führung des oder der Führungszapfen in der oder den zweiten Führungskurven zu gewährleisten, kann am Führungszapfen eine Führungsrolle mit sphärischer Oberfläche angeordnet sein, deren Spiel sich in der Führungskurve beim Ein- und Ausschwenken nicht verändert.

Um ein Herausschnellen des Halters aus dem Gehäuse unter der Wirkung der Biegefeder zu vermeiden, kann zwischen dem Halter und dem Gehäuse eine Viskobremse angeordnet sein.

Vorzugsweise können die Schwenkzapfen der Halbringe koaxial in einem Lager an der Stütze angeordnet sein, wobei ein Schwenkzapfen eines Halbrings in dieses Lager eingreift, während am anderen Halbring ein Schwenklagerring angeordnet ist, der den Schwenkzapfen umgreift.

Die Erfindung wird nachstehend anhand eines in der Zeichnung dargestellten Ausführungsbeispiels des näheren erläutert. In der Zeichnung zeigen:
- Fig. 1: eine perspektivische Darstellung einer erfindungsgemäßen Becherhalteranordnung in der geschlossenen Stellung,
- Fig. 2: eine perspektivische Darstellung einer Becherhalteranordnung in einer halb herausgeschwenkten Stellung,
- Fig. 3: eine perspektivische Darstellung einer Becherhalteranordnung in einer fast ganz ausgeschwenkten Stellung, in der die Halbringe begonnen haben auszuschwenken,
- Fig. 4: eine perspektivische Darstellung einer Becherhalteranordnung in einer vollständig ausgeschwenkten Stellung,
- Fig. 5: eine Seitenansicht einer Becherhalteranordnung entsprechend Fig. 1 mit einer abgenommenen Gehäusehälfte,
- Fig. 6: eine Seitenansicht einer Becherhalteranordnung in einer fast ganz herausgeschwenkten Stellung entsprechend Fig. 3 und
- Fig. 7: eine Seitenansicht einer erfindungsgemäßen Becherhalteranordnung in einer ganz herausgeschwenkten Stellung entsprechend Fig. 4.

Ein schmales Gehäuse 1 besteht aus zwei Gehäusehälften 4 aus Kunststoff, die sich mittels an den Schmalseiten angeordneten Klipselementen 5 zusammenfügen lassen.

Jede Gehäusehälfte 4 weist eine erste Führungskurve 3 in Form eines Schlitzes sowie eine zweite Führungskurve 2 ebenfalls in Form eines Schlitzes auf, die jeweils in einer Seitenwand 6 der Gehäusehälften 4 angeordnet sind.

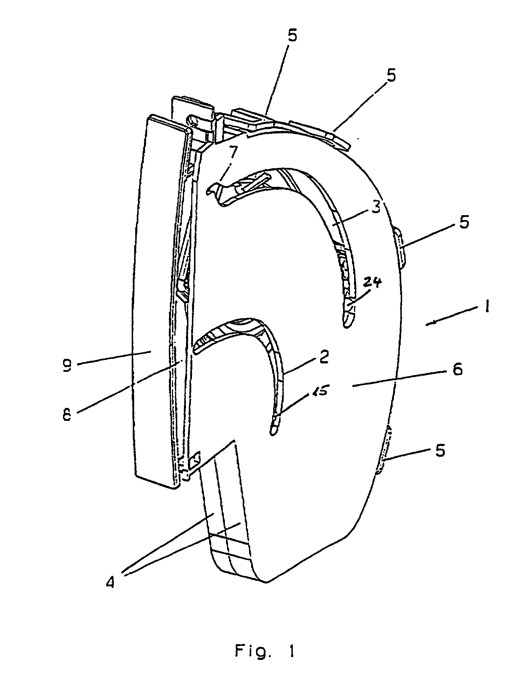

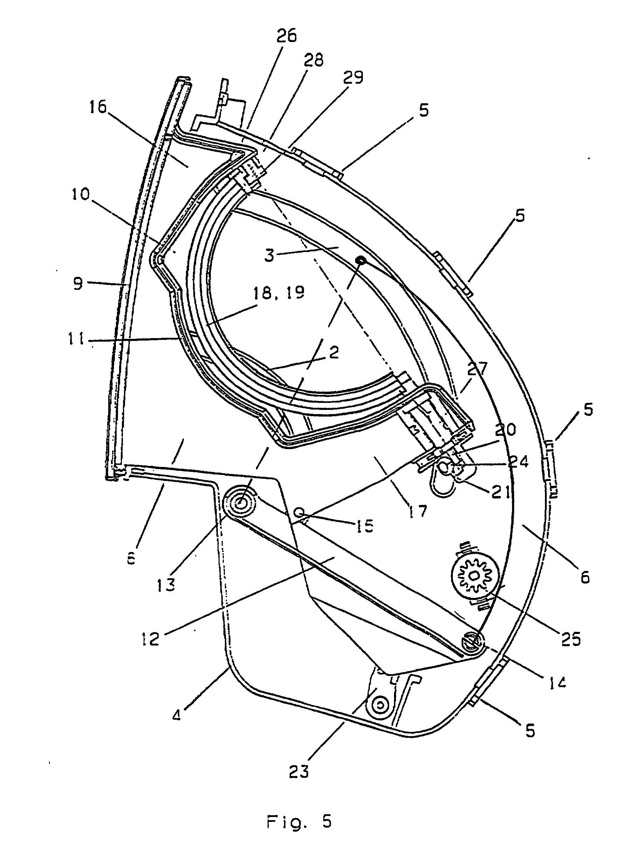

In dem Gehäuse 1 ist ein Halter 8 geführt, an dessen Vorderseite eine Blende 9 angeordnet ist, die eine Öffnung im Gehäuse 1 in der in Fig. 1 und 5 dargestellten Stellung verschließt.

Der Halter 8 ist so gestaltet, daß durch beabstandete Stützen oder Schenkel 16, 17 eine Ausnehmung 10 definiert wird, deren stegartige Verbreiterung 11 zur Versteifung des Halters 8 und zur Abstützung eines Getränkebechers dient.

Am Halter 8 ist ein Lenkerhebel 12 mittels einer Anlenkung 14 befestigt, während das andere Ende des Lenkerhebels 12 am Gehäuse 1 mittels einer Anlenkung 13 befestigt ist.

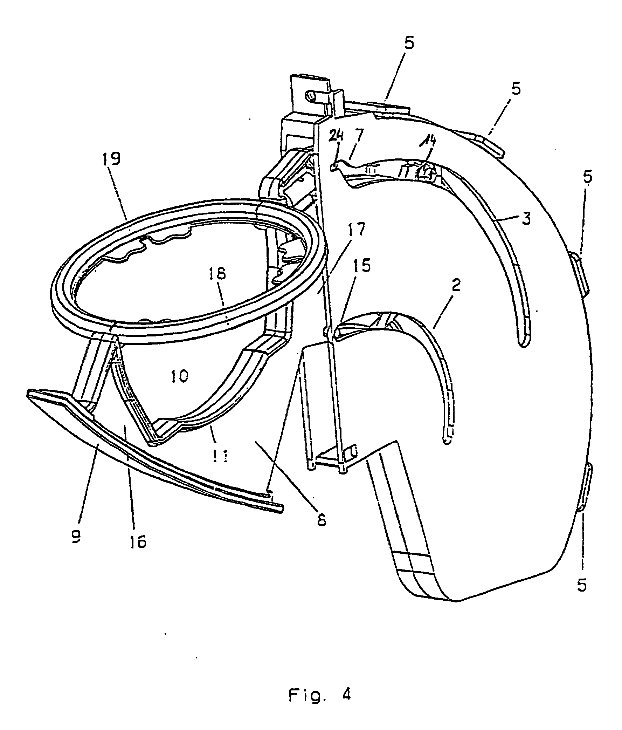

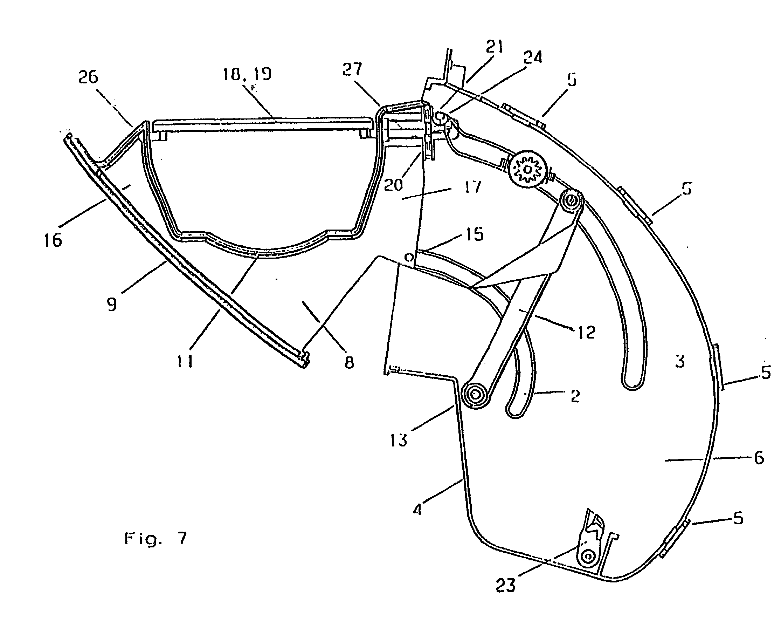

Beim Ausschwenken des Halters 8 beschreibt die Anlenkung 14 somit einen Kreisbogen mit einem Radius, der dem Abstand zwischen den Anlenkungen 13, 14 entspricht. Am Halter 8 sind Führungszapfen 15 befestigt, die in die zweiten Führungskurven 2 in den Seitenwänden 6 der Gehäusehälften 4 eingreifen. Die zweiten Führungskurven (2 streckt sich in Richtung zur Gehäuseöffnung, so daß die Führungszapfen 15 am Halter 8 in Verbindung mit der Bewegung des Lenkerhebels 12 ein Vorschwenken des unteren Bereichs der Blende 9 bewirken, das aus Fig. 4 und 7 ersichtlich ist.

An den oberen Enden der Stützen 16,17 am Halter 8 sind Lager 26, 27 angeordnet, die zur schwenkbaren Halterung von zwei Halbringen 18, 19 dienen. Benachbart zur Stütze 16 weist einer der Halbringe 18, 19 einen Schwenkzapfen 28 auf, der in das Lager 26 eingreift. Der zweite Halbring 18, 19 ist mit einem Schwenklagerring 29 versehen, der den Schwenkzapfen 28 umgreift. Eine ähnliche Lagerung ist im Lager 27 an der Stütze 17 vorgesehen, wobei indessen in diesem Fall ein nicht dargestellter ringförmiger Schwenkzapfen einen durchgehenden Schwenkzapfen 20 umgreift und jeder dieser Schwenkzapfen zu den Seitenwänden 6 der Gehäusehälften 4 gerichtete Führungszapfen 21 aufweist.

Auf diese Führungszapfen 21 sind Führungsrollen 24 mit sphärischer Oberfläche gesetzt, die in die ersten Führungskurven 3 in den Seitenwänden 6 der Gehäusehälften 4 im wesentlichen spielfrei eingreifen.

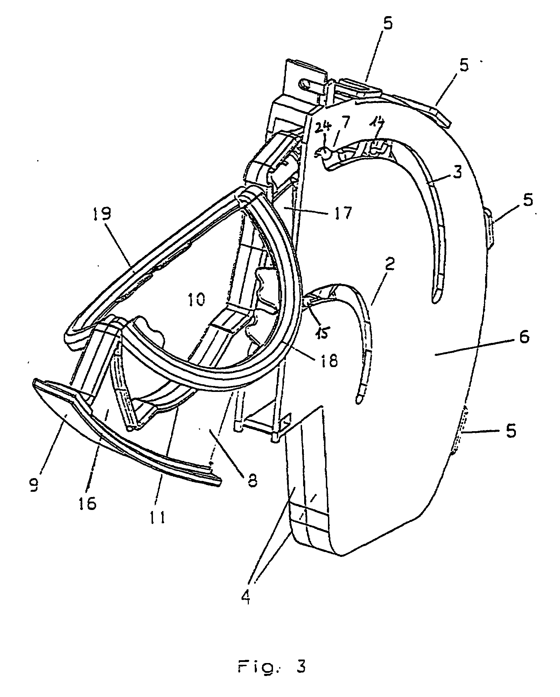

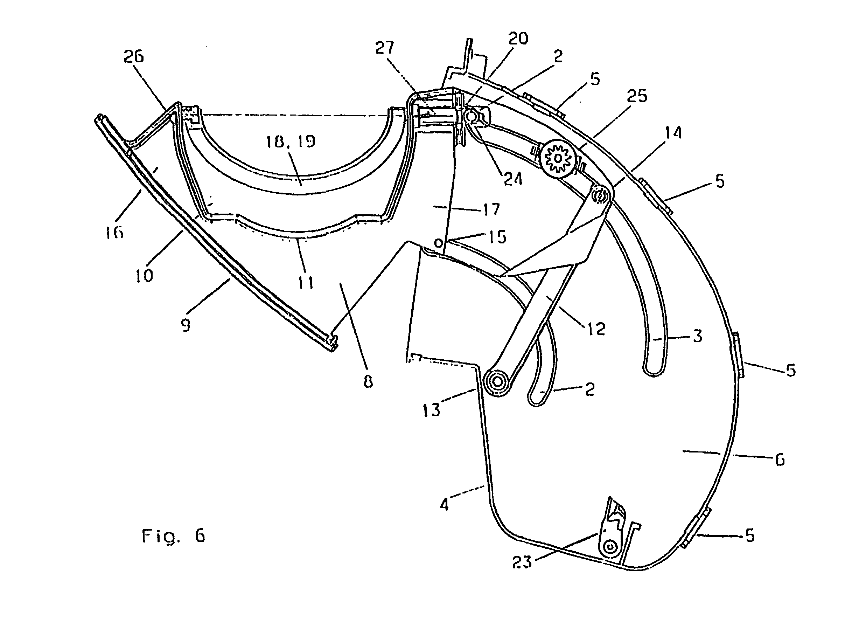

Die ersten Führungskurven 3 sind so gestaltet, daß beim Ausschwenken des Halters 8 die Halbringe 18, 19 zunächst zueinander benachbart in der in den Fig. 1, 2, 5 dargestellten, vollständig eingeklappten, nebeneinander liegenden Stellung verbleiben und erst beginnen auszuschwenken, wie in Fig. 3 und 6 dargestellt, wenn die Halbringe 18,19 vollständig aus dem Gehäuse 1 ausgetreten sind.

Die Innenflächen der Halbringe 18, 19 können zusätzlich mit weichen Lippen versehen sein, die angeklebt oder durch Zwei-Komponenten-Spritzguß angeformt sein können.

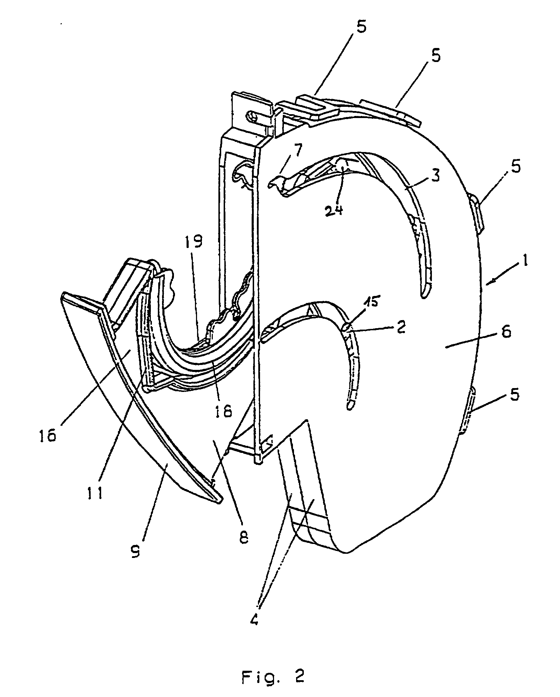

Die der Gehäuseöffnung benachbarten Enden der ersten Führungskurven 3 sind mit einem abgeknickten Bereich 7 versehen, der bewirkt, daß das Ausschwenken in eine ausgebreitete Stellung über 90° während eines sehr kleinen, restlichen Schwenkwinkels des Halters 8 erfolgt. Ebenso erfolgt das Zurückschwenken in die nebeneinander liegende Stellung gemäß Fig. 2 über einen entsprechenden kleinen Winkelweg des Halters 8, um ein ungehindertes Einschwenken des Halters 8 zu erreichen.

Anstelle der koaxialen Schwenkzapfen 20, 28 mit dem Schwenklagerring 29 der Halbringe 18, 19 können auch parallele, nebeneinander liegende Schwenkzapfen vorgesehen sein. In diesem Fall können die Halbringe 18,19 im Lagerbereich mittels Zahnräder gekuppelt sein, so daß nur ein Führungszapfen 21, der mit einer ersten Führungskurve 3 in einer Seitenwand 6 einer Gehäusehälfte 4 zusammenwirkt, erforderlich ist.

Im Gehäuse 1 ist eine schwenkbare Rastanordnung 23 vorgesehen, die mit entsprechenden, nicht dargestellten Rastungen am Halter 8 zusammenwirkt. Hierdurch läßt sich in Verbindung mit einer Biegefeder, die einerseits im Gehäuse 1, beispielsweise im Bereich der Anlenkung 13 befestigt ist und sich andererseits am Halter 8 oder am Lenkerhebel 12 abstützt, eine Tipautomatik vorsehen, die bewirkt, daß durch ein Antippen der Blende 9 am Halter 8 die Rastanordnung 23 gelöst wird und der Halter 8 aus dem Gehäuse 1 ausschwenkt. Um dieses Herausschwenken unter der Wirkung der Biegefeder langsam und stoßfrei zu bewerkstelligen, ist eine Viskobremse 25 am Halter 8 angeordnet, die mit einer Verzahnung am Gehäuse 1 zusammenwirkt und durch die Reibung eines viskosen Fluids im Gehäuse der Viskobremse 25 verhindert, daß der Halter 8 unter der Wirkung der Biegefeder ungehemmt aus dem Gehäuse 1 herausschnappt.

Die Rastanordnung 23 und die Viskobremse 25 sind bekannte Bauelemente, deren Einzelheiten nicht beschrieben zu werden brauchen.

Anstelle der Tipautomatik kann auch vorgesehen sein, den Becherhalter von Hand aufzuziehen und zurückzuziehen.

## Patentansprüche

1. Becherhalteranordnung für ein Kraftfahrzeug mit
- einem schmalen, hochkant stehenden, in einer Armaturentafel eines Kraftfahrzeugs anbringbaren Gehäuse (1),
- einem ausschwenkbaren Halter (8) im Gehäuse (1) mit einer Ausnehmung (10) zur Unterstützung eines Bechers, sowie
- an Stützen (16, 17) des Halters (8) gegenläufig ausschwenkbar angeordneten Halbringen (18, 19) mit wenigstens einem in einer ersten Führungskurve (3) im Gehäuse (1) eingreifenden ersten Führungszapfen (21) an wenigstens einem Schwenkzapfen (20) des einen Halbrings (18, 19), **gekennzeichnet durch** einen Lenkerhebel (12), der einerseits am Gehäuse (1) mittels einer ersten Anlenkung (13) und andererseits am Halter (8) mittels einer zweiten Anlenkung (14) angelenkt ist,
- einer zweiten Führungskurve (2) im Gehäuse (1), in die ein von den Anlenkungen (13, 14) des Lenkerhebels (12) beabstandeter zweiter Führungszapfen (15) des Halters (8) eingreift.

2. Becherhalteranordnung nach Anspruch 1, bei der jeder Schwenkzapfen (20) eines jeden Halbrings (18, 19) jeweils einen der ersten Führungszapfen (21) aufweist, wobei die beiden ersten Führungszapfen (21) in die in gegenüberliegenden Seitenwänden (6) des Gehäuses (1) angeordneten ersten Führungskurven (3) eingreifen.

3. Becherhalteranordnung nach Anspruch 1, bei der der Schwenkzapfen (20) des einen Halbrings (18, 19) den ersten Führungszapfen (21) aufweist, der in die in der einen Seitenwand (6) des Gehäuses (1) angeordnete erste Führungskurve (3) eingreift und der zweite Halbring (19,18) mit dem ersten Halbring (18, 19) mittels Zahnrädern gekuppelt ist.

4. Becherhalteranordnung nach Anspruch 1, 2 oder 3, bei der am Lenkerhebel (12) oder am Halter (8) eine Biegefeder angreift.

5. Becherhalteranordnung nach Anspruch 4, bei der im Gehäuse (1) eine an dem Halter (8) angreifende Rastanordnung (23) vorgesehen ist.

6. Becherhalteranordnung nach einem der Ansprüche 1 bis 5, bei der an dem oder den ersten Führungszapfen (21) eine Führungsrolle (24) mit sphärischer Oberfläche angeordnet ist.

7. Becherhalteranordnung nach einem der Ansprüche 1 bis 6, bei der zwischen dem Halter (8) und dem Gehäuse (1) eine Viskobremse (25) angeordnet ist.

8. Becherhalteranordnung nach einem der Ansprüche 1, 2, 4 bis 7, bei der die Schwenkzapfen (20) koaxial in einem ersten Lager (27) an der Stütze (17) der Stützen (16, 17) angeordnet sind.

9. Becherhalteranordnung nach Anspruch 8, bei der an der anderen Stütze (16) ein zweites Lager (26) angeordnet ist, in das ein weiterer Schwenkzapfen (28) des einen Halbrings (18, 19) eingreift, während am anderen Halbring (19, 18) ein Schwenklagerring (29) angeordnet ist, der den weiteren Schwenkzapfen (28) umgreift.

## Claims

1. Cup holder arrangement for a motor vehicle with
- a narrow housing (1) positioned edgewise which can be attached to a dashboard of a motor vehicle,
- a swing-out holder (8) in the housing (1) with a recess (10) to support a cup, and
- half rings (18, 19) arranged on the supports (16, 17) of the holder (8) so as to be swung out in opposite directions, with at least one first guide pin (21) engaging in a first guide curve (3) in the housing (1) on at least one swivel pin (20) of the one half ring (18, 19), **characterised by**
- a guide lever (12) articulated on the one side to the housing (1) by means of a first articulation (13) and on the other side to the holder (8) by means of a second articulation (14),
- a second guide curve (2) in the housing (1) in which a second guide pin (15) of the holder (8) at a distance from the articulations (13, 14) of the guide lever (12) engages.

2. Cup holder arrangement according to claim 1, in which each swivel pin (20) of each half ring (18, 19) comprises one of the respective first guide pins (21), wherein the two first guide pins (21) engage in the first guide curves (3) arranged in opposing side walls (6) of the housing (1).

3. Cup holder arrangement according to claim 1, in which the swivel pin (20) of the one half ring (18, 19) comprises the first guide pin (21) engaging in the first guide curve (3) arranged in the one side wall (6) of the housing (1) and the second half ring (19, 18) is coupled to the first half ring (18, 19) by means of toothed wheels.

4. Cup holder arrangement according to claim 1, 2 or 3 in which a helical spring acts on the guide lever (12) or on the holder (8).

5. Cup holder arrangement according to claim 4 in which a latching arrangement (23) acting on the holder (8) is provided in the housing (1).

6. Cup holder arrangement according to any of claims 1 to 5 in which a guide roller (24) with a spherical surface is arranged on the guide pin (21) or the first guide pins (21).

7. Cup holder arrangement according to any of claims 1 to 6 in which a viscous brake (25) is arranged between the holder (8) and the housing (1).

8. Cup holder arrangement according to any of claims 1, 2, 4 to 7 in which the swivel pins (20) are arranged coaxially in a first bearing (27) on the support (17) of the supports (16, 17).

9. Cup holder arrangement according to claim 8 in which a second bearing (26) in which a further swivel pin (28) of the one half ring (18, 19) engages is arranged on the other support (16), while a pivot bearing ring (29) surrounding the further swivel pin (28) is arranged on the other half ring (19, 18).

## Revendications

1. Ensemble support de gobelet pour un véhicule automobile comportant
- un boîtier (1) étroit, dressé de chant, à placer dans un tableau de bord d'un véhicule automobile,
- un support (8) pouvant basculer vers l'extérieur dans le boîtier (1) avec un évidement (10) destiné à supporter un gobelet, ainsi que
- des demi-anneaux (18, 19) disposés de manière à pouvoir pivoter en sens contraire vers l'extérieur, sur des appuis (16, 17) du support (8), avec au moins un premier doigt de guidage (21) s'engageant dans une première courbe de guidage (3) dans le boîtier (1), sur au moins un axe de pivotement (20) d'un demi-anneau (18, 19), **caractérisé par**
- un bras oscillant (12) qui est articulé d'une part sur le boîtier (1) au moyen d'une première articulation (13) et d'autre part sur le support (8) au moyen d'une deuxième articulation (14),
une deuxième courbe de guidage (2) dans le boîtier (1) dans laquelle s'engage un deuxième doigt de guidage (15) du support (8) espacé des articulations (13, 14) du bras oscillant (12).

2. Ensemble support de gobelet selon la revendication 1, dans lequel chaque axe de pivotement (20) de chaque demi-anneau (18, 19) comporte un des premiers doigts de guidage (21), les deux premiers doigts de guidage (21) s'engageant dans les premières courbes de guidage (3) disposées dans des parois latérales (6) opposées du boîtier (1).

3. Ensemble support de gobelet selon la revendication 1, dans lequel l'axe de pivotement (20) d'un demi-anneau (18, 19) comporte le premier doigt de guidage (21) qui s'engage dans la première courbe de guidage (3), disposée dans une paroi latérale (6) du boîtier (1), et le deuxième demi-anneau (19, 18) est accouplé au demi-anneau (18, 19) au moyen de roues dentées.

4. Ensemble support de gobelet selon les revendications 1, 2 ou 3, dans lequel un ressort de flexion agit sur le bras oscillant (12) ou sur le support (8).

5. Ensemble support de gobelet selon la revendication 4, dans lequel un dispositif d'arrêt (23) agissant sur le support (8) est prévu dans le boîtier (1).

6. Ensemble support de gobelet selon l'une des revendications 1 à 5, dans lequel un galet de guidage (24) de surface sphérique est disposé sur le premier ou les premiers doigts de guidage (21).

7. Ensemble support de gobelet selon l'une des revendications 1 à 6, dans lequel un viscofrein (25) est disposé entre le support (8) et le boîtier (1).

8. Ensemble support de gobelet selon l'une des revendications 1, 2, 4 à 7, dans lequel les axes de pivotement (20) sont disposés coaxialement dans un premier palier (27) sur l'appui 17 des appuis (16, 17).

9. Ensemble support de gobelet selon la revendication 8, dans lequel sur l'autre appui (16) est disposé un deuxième palier (26) dans lequel s'engage un autre axe de pivotement (28) d'un demi-anneau (18, 19), tandis que sur l'autre demi-anneau (19, 18) est disposé un anneau de palier de pivotement (29) qui entoure l'autre axe de pivotement (28).
